# EUROPÄISCHE PATENTSCHRIFT

(11) **EP 0 875 681 B1**
(45) Veröffentlichungstag und Bekanntmachung des Hinweises auf die Patenterteilung: **02.07.2003**
(21) Anmeldenummer: 98250124.9
(22) Anmeldetag: 07.04.1998
(51) Int. Cl.: F15B 15/18

(54) **Elektrohydraulisches Betätigungsgerät für Bremsen für Industrieanlagen**
Electrohydraulic actuator for brakes for industrial plant
Vérin électrohydraulique pour les freins de l'équipement industriel

(30) Priorität: 30.04.1997 DE 19719080
(43) Veröffentlichungstag der Anmeldung: 04.11.1998
(73) Patentinhaber: Mannesmannröhren-Werke AG, 45473 Mülheim a.d. Ruhr (DE)
(72) Erfinder: Schmitz, Werner, 47259 Duisburg (DE); Berlin, Frank, 47447 Moers (DE); Gohres, Hans-Werner, 47239 Duisburg (DE); Bornebusch, Karl-Erich, 40668 Meerbusch (DE); Asmus, Norbert, 47441 Moers (DE)
(74) Vertreter: Meissner, Peter E., Dipl.-Ing.

(56) Entgegenhaltungen:
- US-A- 3 707 844
- US-A- 3 848 411
- US-A- 4 627 235
- US-A- 4 642 986

## Beschreibung

Die Erfindung betrifft ein elektrohydraulisches Betätigungsgerät für Bremsen für Industrieanlagen gemäß dem Oberbegriff des Patenanspruches 1.

Ein derartiges Betätigungsgerät ist aus der US-A-3 707 844 bekannt.

Für das Festhalten, Abstoppen oder die geregelte Bewegung von Last oder Hebezeug werden Bremsen in Form von Handbremsen, Backenbremsen oder Scheibenbremsen angeordnet. Die Bremskraft wird im Bereich der Industrieanlagen vorzugsweise durch eine Feder aufgebracht. Das Lüften der Bremse erfolgt über ein elektrohydraulisches Betätigungsgerät, wie es beispielsweise in Bild 36 in Verbindung mit Bild 38 des Dubbel-Taschenbuch für den Maschinenbau, 18. Auflage, Springer Verlag 1995, in Kapitel U 16 dargestellt ist Das unter dem Produktnamen Eldro vertriebene Betätigungsgerät ist ein elektrohydraulisches Hubgerät. Dieses besteht aus einer in einem Gehäuse angeordneten Kolben-Zylindereinheit mit einer Kolbenstange, die von einer im Zylinderraum und im Gehäuse angeordneten als Spiralfeder ausgebildeten Bremsfeder koaxial umfasst wird. Auf der Abtriebswelle eines im Bodenbereich der Vorrichtung angeordneten E-Motors sind zwei Pumpräder befestigt, die das im Gehäuse einfüllbare Hydrauliköl gegen die Stirnfläche des Kolbens pumpen. Der sich dabei aufbauende Druck drückt den Kolben gegen die Kraft der Bremsfeder, so daß damit die Bremse gelüftet werden kann. Das Betätigungsgerät ist mit einem Ende auf einer Trägerplatte und mit dem Ende der Kolbenstange an einem Hebel befestigt. Dieser Hebel ist über ein Gestänge mit den eigentlichen Bremshebeln und den daran angelenkten Bremsbacken verbunden. Die Pumpen-Motoreinheit arbeitet im Niederdruckbereich, so daß die aufgrund der schwachen Auslegung der Bremsfeder auf die Bremsbacken wirkenden Kräfte gering sind. Nachteilig bei dieser bekannten Ausführung ist auch, daß aufgrund des großen zu verdrängenden Volumens die Schließzeit relativ lang ist, so daß dieses Betätigungsgerät für bestimmte Anwendungsfälle nicht geeignet ist. Von weiterem Nachteil ist, daß die Verbindung zwischen Pumpen-Motoreinheit und Kolben-Zylindereinheit mehrere Dichtstellen aufweist, die zu Leckagen führen können. Im schlechtesten Falle können die Leckagen so groß werden, daß das Betätigungsgerät nicht mehr funktionsfähig ist.

Aufgabe der Erfindung ist es, ein elektrohydraulisches Betätigungsgerät für Bremsen für Industrieanlagen anzugeben, mit dem bei geringem Platzbedarf auch die Übertragung großer Betätigungskräfte und kurze Schließzeiten realisierbar sind. Eine weitergehende Aufgabe besteht darin, die Funktionsbereitschaft in einfacher Weise überwachen zu können.

Ausgehend vom Oberbegriff des Patentanspruches wird diese Aufgabe mit den im kennzeichnenden Teil angegebenen Merkmalen gelöst. Vorteilhafte Weiterbildungen sind Bestandteil von Unteransprüchen.

Im Unterschied zum bekannten Stand der Technik ist das erfindungsgemäß ausgebildete elektrohydraulische Betätigungsgerät in Blockbauweise für Hochdruck ausgelegt. Ein verdickter, den Bodendeckel bildenden Bereich schließt den die Bremsfeder umfassenden Gehäusebereich ab und weist eine Ausnehmung auf, in der der Kolben hochdruckabgedichtet geführt ist. Die Hochdruckseite der Ausnehmung und die Drucklosseite im die Bremsfeder umfassenden Gehäusebereich sind über im Rücklaufbehälter der Hydraulikanlage mündende Kanäle miteinander verbunden. Das Sperrglied zwischen Hochdruck- und Drucklosseite bildet mindestens ein in Wirkverbindung mit der Pumpen-Motoreinheit stehendes Schaltventil.

Im Hinblick auf eine Kompaktbauweise und zur Vermeidung außenliegender Schläuche und Hydraulikleitungen sind die Pumpe, der Rücklaufbehälter, die Ventile sowie Überwachungseinrichtungen im Bodendeckel integriert. Im Rücklaufbehälter münden zum einen der Kanal Drucklosseite und der Ansaugkanal der Pumpe sowie die Rücklaufleitung des Schaltventils. Eine Parallelanordnung des am Bodendeckel angeflanschten Motors der Pumpen-Motoreinheit verringert den für das erfindungsgemäß ausgebildete Betätigungsgerät notwendigen Platzbedarf.

Ein Vorteil des vorgeschlagenen Betätigungsgerätes ist darin zu sehen, daß wegen der Auslegung für Hochdruck eine entsprechend starke Feder verwendbar ist, so daß große Betätigungskräfte möglich sind. Da keine rotierenden Teile zum Einsatz kommen, ist eine hohe Zuverlässigkeit gegeben. Die kompakte Bauform erfordert wenig Platz und bietet wenig Angriffsfläche für störende Beeinträchtigungen der Funktionsfähigkeit. Dazu zählt auch die Vermeidung der Anordnung von außen angebrachter Schläuche und Hydraulikleitungen. Der interne Druckausgleich über die Verbindung der Drucklosseite mit dem Rücklaufbehälter für das Hydrauliköl verhindert das Ansaugen von Schmutz in das Gerät bei Betätigung. Da die Hochdruckdichtung innenliegend ist, kann kein Leckageöl nach außen dringen, so daß die Betätigungsfunktion "offen" erhalten bleibt. Ein durchlaufender Motor der Pumpen-Motoreinheit signalisiert eine Hochdruckleckage, die beispielsweise auf einem Überwachungspult anzeigbar ist. Somit ergibt sich ein Vorwarnsystem, das es ermöglicht, frühzeitig die defekte Dichtung bzw. das Betätigungsgerät auszuwechseln. Auf eine aufwendige Kräfteumlenkung mittels eines Bremsgestänges kann verzichtet werden, da die hohen realisierbaren Betätigungskräfte dies nicht erfordern. Durch den Wegfall des dazugehörenden Bremsgestänges kann die gesamte Bremsenkonstruktion stark vereinfacht werden. Im Sinne der Aufrechterhaltung der Funktionsbereitschaft des Betätigungsgerätes sind wesentliche Elemente wie z. B. das Schaltventil und die Überdrucksicherung redundant ausgeführt. Zusätzlich ist am Gehäuse ein Wegsensor angeordnet, der die aktuelle Stellung des Kolbens anzeigt. Damit kann die Bewegung des Kolbens bei Veränderung der Druckverhältnisse überwacht werden. Die Anordnung eines Stellungsschalters mit Hysterese für den Kolben des Betätigungsgerätes ermöglicht es, das Ein- bzw. Ausschalten der Pumpe auszulösen und damit auf die Anordnung zweier Druckschalter und einen Kolbenspeicher in der Hydraulikanlage zu verzichten.

In der Zeichnung wird anhand eines Ausführungsbeispieles das erfindungsgemäß ausgebildete elektrohydraulische Betätigungsgerät näher erläutert.

Es zeigen:
- Figur 1: eine perspektivische Darstellung eines Ausführungsbeispieles einer Scheibenbremse mit einem erfindungsgemäß ausgebildeten elektrohydraulischen Betätigungsgerät
- Figur 2: einen Längsschnitt durch die Bremslüfteinrichtung
- Figur 3: schematisch die Einzelheiten der hydraulischen Schaltung

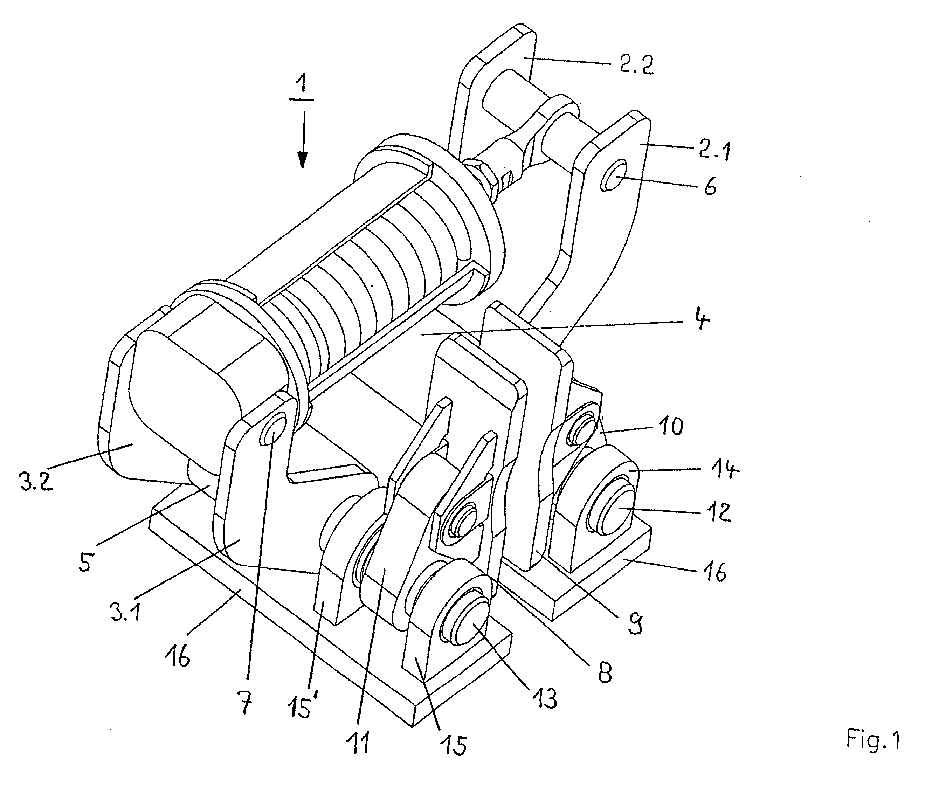

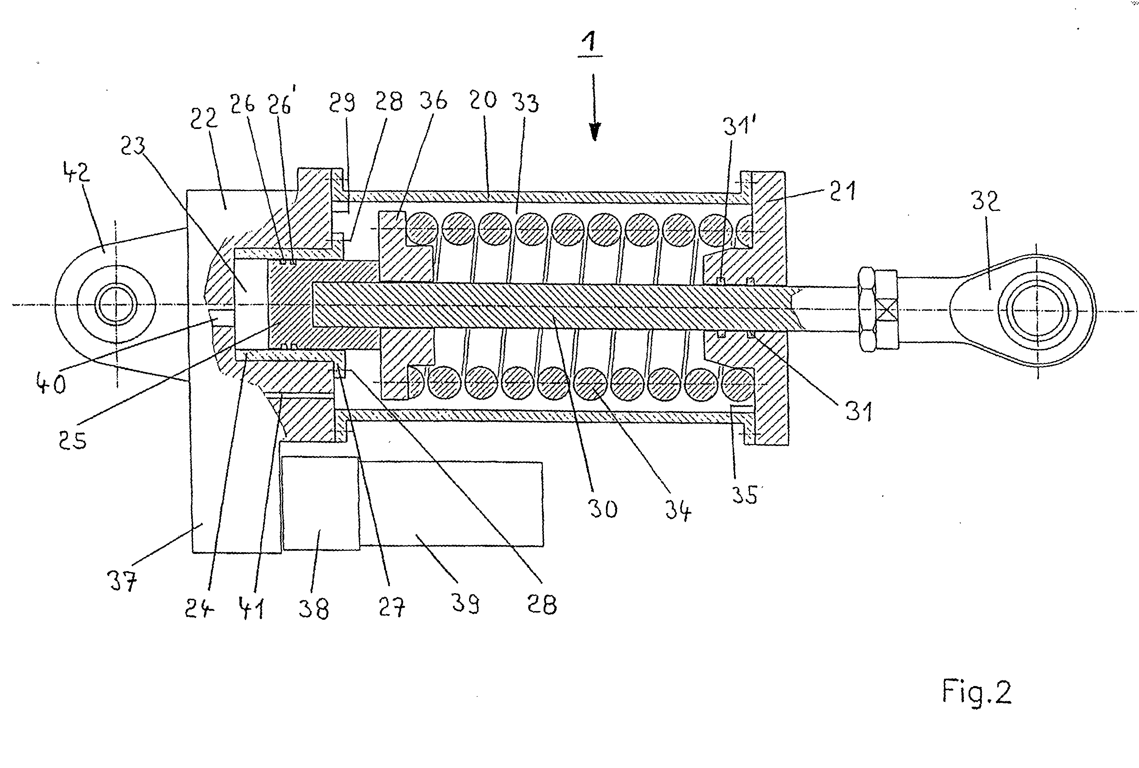

Figur 1 zeigt in einer perspektivischen Darstellung ein Ausführungsbeispiel einer Scheibenbremse mit einem erfindungsgemäß ausgebildeten elektrohydraulischen Betätigungsgerät 1, das in Figur 2 näher erläutert wird. Die Enden des Betätigungsgerätes 1 sind an den offenen Enden zweier einander gegenüber liegender Hebel 2,3 angelenkt. In diesem Ausführungsbeispiel weisen die Hebel 2,3 jeweils ein Laschenpaar 2.1,2.2 bzw. 3.1, 3.2 auf mit einer Hülse 4,5 als Abstandshalter. Die Anlenkung des Betätigungsgerätes 1 erfolgt über einen Bolzen 6,7, der sich durch das jeweilige Laschenpaar 2,1, 2.2 bzw. 3.1, 3.2 erstreckt. Zum Abbremsen einer hier nicht dargestellten Scheibe weist die Bremse zwei einander gegenüberliegende Bremsbacken 8,9 auf, die angelenkt an einem kurzen Bremshebel 10,11 befestigt sind. Der kurze Bremshebel 10,11 ist an einer Welle 12,13 befestigt, die jeweils in einem Stützbockpaar 14,14', 15,15' schwenkbar gelagert ist. Beide Stützbockpaare 14,14'; 15,15' sind auf einer ebenen Trägerplatte 16 befestigt. Die Momentenübertragung zwischen den Laschenpaaren 2.1, 2.2; 3.1, 3.2 und den kurzen Bremshebeln 10,11 erfolgt in der Weise, daß sich die Welle 12,13 über die Stützbockpaare 14,14'; 15,15' hinaus erstreckt und mit dem unteren Ende der bereits erläuterten Laschenpaare 2.1, 2.2; 3.1, 3.2 fest verbunden ist.

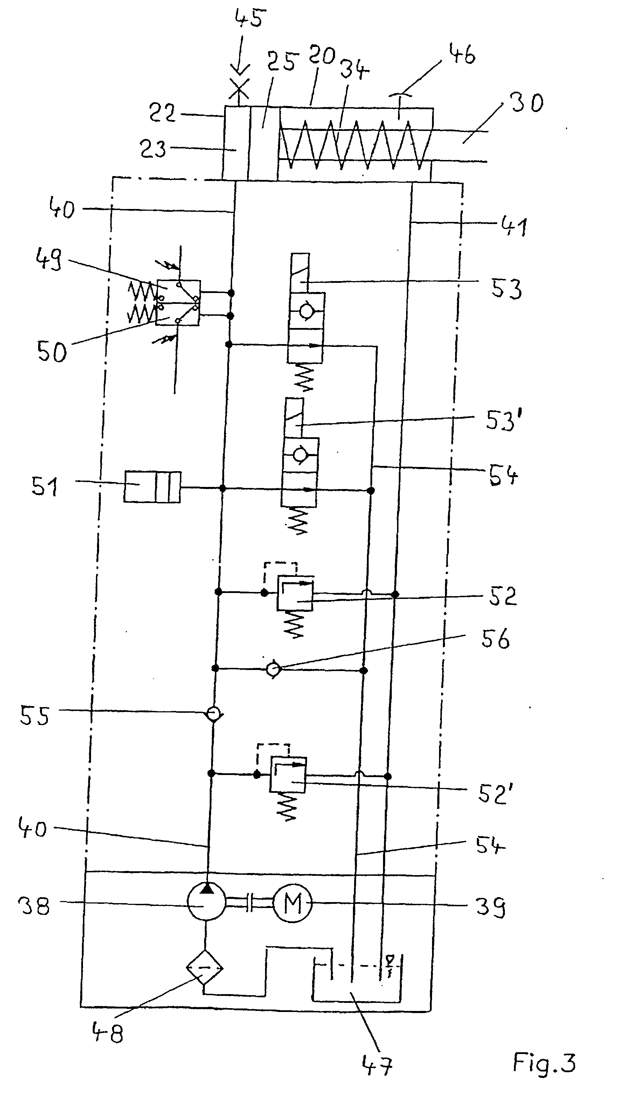

Figur 2 zeigt in einem Längsschnitt die Einzelheiten des Betätigungsgerätes 1. Dieses weist ein zylindrisches Gehäuse 20 auf, dessen beidseitige Öffnungen mit je einem Deckel 21,22 verschlossen sind, wobei der Bodendeckel 22 verdickt ist. In einer Ausnehmung 23 des Bodendeckels 22 ist eine Führungsbüchse 24 angeordnet, in der ein Kolben 25 gegen Hochdruck abdichtend geführt ist. Die Abdichtung erfolgt über im Mantelbereich des Kolbens 25 angeordnete Dichtungen 26,26'. In diesem Ausführungsbeispiel weist die Führungsbüchse 24 einen ringförmigen Flansch 27 auf, der mittels Schrauben 28 auf der Stirnseite 29 des Bodendeckels 22 befestigt ist. Mit dem Kolben 25 fest verbunden ist eine Kolbenstange 30, die abgedichtet durch den Kopfdeckel 21 geführt ist. Die Abdichtung erfolgt über in der Bohrung des Kopfdeckels 21 angeordnete Dichtungen 31,31'. Am offenen Ende der Kolbenstange 30 ist ein Auge 32 für die Anlenkung am Laschenpaar 2.1, 2.2 (Figur 1) angeordnet. Die Kolbenstange 30 wird im Zylinderaum 33 koaxial von einer als Spiralfeder ausgebildeten Bremsfeder 34 umfasst. Diese stützt sich mit einem Ende auf die innen liegende Stimseite 35 des Kopfdeckels 21 und mit dem anderen Ende auf einen auf der Kolbenstange 30 axial verschiebbar angeordneten Haltekörper 36 ab. An einer radialen Verlängerung 37 des Bodendeckels 22 ist in diesem Ausführungsbeispiel eine Pumpe 38 und ein Antriebsmotor 39 angeflanscht. Aus Platzgründen und im Hinblick auf eine kompakte Bauform liegt diese Einheit parallel zum Gehäuse 20 in Richtung des Kopfdeckels 21. Um die Kompaktbauweise noch zu verstärken, kann die Pumpe 38 im Bodendeckel integriert sein. Die Einzelheiten der hydraulischen Schaltung sind in Figur 3 erläutert. Die Anlenkung des Betätigungsgerätes 1 am anderen Ende erfolgt über ein am Bodendeckel 22 angeordnetes Auge 42.

Das Betätigungsgerät 1 arbeitet in der Weise, daß zum Lüften der Bremse die Pumpe 38 Hydrauliköl vom Rücklaufbehälter 47 (Figur 3) über den Kanal 40 in die Ausnehmung 23 pumpt. Dort wird ein Druck aufgebaut, der den Kolben 25 nach rechts entgegen der Kraft der Bremsfeder 34 schiebt. Diese Verschiebung wird über die mit dem Kolben 25 fest verbundene Kolbenstange 30 auf das Auge 32 und damit auf das in Figur 1 dargestellte Laschenpaar 2.1, 2.2 und in Form einer Gegenkraft auf das Laschenpaar 3.1, 3.2 übertragen. Durch die Welle 12,13 wird die Verschwenkung der Laschenpaare 2.1, 2.2; 3.1, 3.2 auf die kurzen Bremshebel 10,11 und damit auf die Bremsbacken 8,9 übertragen. Ist die Bremse als Sicherheitsbremse ausgelegt, dann ist die Bremse im Normalbetrieb gelüftet. Im Notfall öffnet sich ein Schaltventil (Fig. 3), so daß der Druck in der Ausnehmung 23 abfällt. Die Kraft der Bremsfeder 34 drückt den Kolben 25 in die Ausnehmung 23 und die Kolbenstange 30 wird nach links bewegt. Das verdrängte Hydrauliköl fließt vom Kanal 40 über das geöffnete Schaltventil in den Rücklaufbehälter 47.

In Figur 3 ist schematisch die Hydraulikanlage dargestellt. Vom Betätigungsgerät 1 (Fig. 2) sind hier nur die wesentlichen Elemente wie Kolben 25, Kolbenstange 30, die Bremsfeder 34 und das zylindrische Gehäuse 20 wiedergegeben. Auf der Hochdruckseite ist ein Entlüftungsventil 45 und im Gehäusebereich ein Wegsensor 46 angeordnet. Der auf der Hochdruckseite mündende Kanal 40 ist direkt mit der Pumpen-Motoreinheit 38, 39 verbunden. Zum Auffüllen entnimmt die Pumpe 38 über einen Ansaugfilter 48 Hydrauliköl aus einem Rücklaufbehälter 47 und drückt es über den Kanal 40 in die Ausnehmung 23. Das Ein- und Ausschalten der Pumpe 38 wird durch im Kanal 40 angeordnete Druckschalter 49, 50 gesteuert, wobei der eine Schalter 50 auf Unterschreitung eines festgelegten Mindestdruckes und der zweite Schalter 49 auf Überschreitung eines festgelegten Maximaldruckes anspricht. Damit die Pumpe 38 nun nicht ständig ein- und ausgeschaltet werden muß, ist im Kanal 40 als Puffer ein Kolbenspeicher 51 angeordnet. Aus Sicherheitsgründen ist zwischen dem Kanal 40 der Hochdruckseite und dem Kanal 41 der Drucklosseite ein Überdruckventil 52 angeordnet. Im Sinne einer Redundanz ist ein zweites Überdruckventil 52' vorgesehen. Wie zuvor schon in Figur 2 erläutert, muß im Notfall der Druck in der Ausnehmung 23 schlagartig reduziert werden, damit die Bremsfeder 34 sich entspannen und über die Hebel 2.1, 2.2, 3.1, 3.2 die Bremsbacken 8, 9 auf die Bremsscheibe gepreßt werden. Dazu ist im Kanal 40 der Hochdruckseite ein Schaltventil 53 angeordnet. Das Schaltventil 53 ist für diese besondere Funktion in der Weise angepaßt, daß es einen kurzen Hub und einen großen Durchtrittsquerschnitt aufweist. Es versteht sich von selbst, daß der zuführende Kanal 40 sowie der wegführende Kanal 54 ebenfalls mit einem großen lichten Querschnitt versehen sind. Auf diese Weise ist sichergestellt, daß die Einfallzeit für die Bremse sehr gering ist. Aus Redundanzgründen ist vergleichbar wie für das Überdruckventil 52, 52' ein zweites parallel angeordnetes Schaltventil 53' vorgesehen. Der Vollständigkeit halber sei darauf hingewiesen, daß im Kanal 40 der Hochdruckseite ein Rückschlagventil 55 angeordnet ist, das sich so einstellt, daß bei Ausfall der Pumpe 38 kein Hydrauliköl zurückfließen kann. Um den Kolben 25 bei der Justierung von Hand bewegen zu können, ist zum Nachsaugen zwischen dem Kanal 40 der Hochdruckseite und dem Kanal 41 der Drucklosseite ein Rückschlagventil 56 angeordnet.

## Patentansprüche

1. Elektrohydraulisches Betätigungsgerät für Bremsen für Industrieanlagen, bestehend aus einer Pumpen-Motoreinheit (38,39) sowie einer in einem Gehäuse angeordneten Kolben-Zylindereinheit, (23, 25) die mit einer abgedichtet durch das Gehäuse geführten Kolbenstange und einer im Gehäuse angeordneten, die Kolbenstange koaxial umfassenden als Spiralfeder ausgebildeten Bremsfeder (34) versehen ist, wobei zumindest der die Bremsfeder (34) umfassende Gehäusebereich mit Hydrauliköl drucklos gefüllt ist,
**dadurch gekennzeichnet,**
**daß** das Betätigungsgerät (1) in Blockbauweise für Hochdruck ausgelegt ist und einen einen Bodendeckel (22) bildenden und den die Bremsfeder (34) umfassenden Gehäusebereich (20) abschließenden verdickten Bereich aufweist, in dem der Kolben (25) in einer Ausnehmung (23) gegen Hochdruck abgedichtet (26, 26') geführt ist, daß die Hochdruckseite in der Ausnehmung (23) und die Drucklosseite im die Bremsfeder (34) umfassenden Gehäusebereich (20) über in einem Rücklaufbehälter (47) der Hydraulikanlage mündende Kanäle (40, 41) miteinander verbunden sind und das Sperrglied zwischen Hochdruck- und Drucklosseite mindestens ein in Wirkverbindung mit der Pumpen-Motoreinheit (38, 39) stehendes Schaltventil (53, 53') bildet, daß der Kanal (40, 41) der Hochdruck- und der Drucklosseite sich durch den Bodendeckel (22) erstreckt und zwischen Hochdruck- und Drucklosseite mindestens ein Überdruckventil (52, 52') angeordnet ist und daß die Pumpe (38) , der Rücklaufbehälter (47), die Ventile (45, 52, 52', 53, 53', 55, 56) sowie Überwachungseinrichtungen (46) im Bodendeckel (22) integriert sind.

2. Betätigungsgerät nach Anspruch 1,
**dadurch gekennzeichnet,**
**daß** der Motor (39) der Pumpen-Motoreinheit (38, 39) parallel zur Gehäuseachse liegend am Bodendeckel (22) in Richtung Kopfdeckel (21) angeflanscht ist.

3. Betätigungsgerät nach Anspruch 1;
**dadurch gekennzeichnet,**
**daß** in der Ausnehmung (23) eine Führungsbüchse (28) angeordnet ist.

4. Betätigungsgerät nach Anspruch 1,
**dadurch gekennzeichnet,**
**daß** das Schaltventil (53, 53') einen kurzen Hub und einen großen Durchtrittsquerschnitt aufweist.

5. Betätigungsgerät nach Anspruch 1,
**dadurch gekennzeichnet,**
**daß** ein Ölkühler im Bodendeckel (22) integriert ist.

6. Betätigungsgerät nach Anspruch 4,
**dadurch gekennzeichnet,**
**daß** der von der Hochdruckseite zum Schaltventil (53, 53') hinführende (40) und der vom Schaltventil (53, 53') zum Rücklaufbehälter (47) wegführende Kanal (54) einen großen lichten Querschnitt aufweisen.

7. Betätigungsgerät nach einem der Ansprüche 1 - 6,
**dadurch gekennzeichnet,**
**daß** am Gehäuse (20) ein den Weg des Kolbens (25) erfassender Sensor (46) angeordnet ist.

8. Betätigungsgerät nach einem der Ansprüche 1 - 7,
**dadurch gekennzeichnet,**
**daß** das Schaltventil (53, 53') und das Überdruckventil (52, 52') redundant ausgelegt sind.

## Claims

1. Electrohydraulic actuator for brakes on industrial equipment, consisting of a pump motor unit (38, 39) and of a piston cylinder unit (23, 25) which is positioned inside a casing and which has a piston rod that passes through the casing and is sealed off from it and a brake spring (34) in the form of a flat coil spring that surrounds the piston rod coaxially; at least that part of the casing that surrounds the brake spring (34) being filled with unpressurized hydraulic oil,
**characterised in that**
the actuator (1) is designed as a modular construction for high pressure and has a thicker area which forms a bottom cover (22) and closes off the part of the casing (20) that surrounds the brake spring (34), in which thicker area is held, sealed off (26, 26') against high pressure, the piston (25) in a recess (23); that the high-pressure side in the recess (23), and the unpressurized side in the casing area (20) surrounding the brake spring (34), are linked to each other by means of channels (40, 41) that open out in a reservoir (47) of the hydraulic system, and the barrier element between the high-pressure and the unpressurized sides forms at least one on-off valve (53, 53') which has an operative connection with the pump motor unit (38, 39); that the channel (40, 41) of the high-pressure and unpressurized sides extends through the bottom cover (22), and at least one pressure relief valve (52, 52') is placed between the high-pressure and unpressurized sides; and that the pump (38), the reservoir (47), the valves (42, 52, 52', 53, 53', 55, 56), and monitoring devices (46) are integrated into the bottom cover (22).

2. Actuator as in Claim 1,
**characterised in that**
the motor (39) of the pump motor unit (38, 39) is flange-mounted, parallel to the axis of the casing, on the bottom cover (22) towards the top cover (21).

3. Actuator as in Claim 1,
**characterised in that**
a guide bush (28) is positioned in the recess (23).

4. Actuator as in Claim 1,
**characterised in that**
the on-off valve (53, 53') has a short length of travel and a large nozzle aperture cross-sectional area.

5. Actuator as in Claim 1
**characterised in that**
an oil cooler is integrated into the bottom cover (22).

6. Actuator as in Claim 4,
**characterised in that**
the channel (40) leading out from the high-pressure side to the on-off valve (53, 53'), and the channel (54) leading away from the on-off valve (53, 53') to the reservoir (47), have a wide opening.

7. Actuator as in one of Claims 1 - 6,
**characterised in that**
a sensor (46) is placed on the casing (20) to register the path of the piston (25).

8. Actuator as in one of Claims 1 - 7,
**characterised in that**
the on-off valve (53, 53') and the pressure relief valve (52, 52') are designed redundantly.

## Revendications

1. Appareil d'actionnement électrohydraulique pour le freinage pour des installations industrielles, constitué d'une unité pompe-moteur (38, 39) ainsi que d'un vérin (23, 25) agencé dans un carter, qui est muni d'une tige de piston guidée de façon étanchéifiée à travers le carter et d'un ressort de frein (34) agencé dans le carter, entourant coaxialement la tige de piston, et réalisé comme ressort spiral, au moins la zone du carter entourant le ressort de frein (34) étant remplie d'huile hydraulique sans pression,
**caractérisé en ce que** l'appareil d'actionnement (1), de construction en bloc, est prévu pour une pression élevée et présente une zone épaissie, formant un couvercle de fond (22) et fermant la zone de carter (20) entourant le ressort de frein (34), dans laquelle le piston (25) est guidé dans un évidement (23) de façon étanchéifiée (26, 26') contre une pression élevée, **en ce que** le côté à pression élevée dans l'évidement (23) et le côté sans pression dans la zone de carter (20) entourant le ressort de frein (34) sont reliés ensemble via des canaux (40, 41) débouchant dans un récipient de retour (47) de l'installation hydraulique, et l'élément d'arrêt entre le côté à pression élevée et le côté sans pression forme au moins une valve de commutation (53, 53') se trouvant en liaison active avec l'unité pompe-moteur (38, 39), **en ce que** le canal (40, 41) du côté à pression élevée et du côté sans pression s'étend à travers le couvercle de fond (22) et, entre le côté à pression élevée et le côté sans pression, au moins une valve de surpression (52, 52') est agencée, et **en ce que** la pompe (38), le récipient de retour (47), les valves (45, 52, 52', 53, 53', 55, 56), ainsi que des dispositifs de surveillance (46) sont intégrés dans le couvercle de fond (22).

2. Appareil d'actionnement selon la revendication 1,
**caractérisé en ce que** le moteur (39) de l'unité pompe-moteur (38, 39) est bridé sur le couvercle de fond (22) en direction du couvercle de tête (21) en s'étendant parallèlement à l'axe du carter.

3. Appareil d'actionnement selon la revendication 1,
**caractérisé en ce qu'**un manchon de guidage (28) est agencé dans l'évidement (23).

4. Appareil d'actionnement selon la revendication 1,
**caractérisé en ce que** la valve de commutation (53, 53') présente une courte course et une grande section transversale de passage.

5. Appareil d'actionnement selon la revendication 1,
**caractérisé en ce qu'**un refroidisseur d'huile est intégré dans le couvercle de fond (22).

6. Appareil d'actionnement selon la revendication 4,
**caractérisé en ce que** le canal (40) menant du côté à pression élevée vers la valve de commutation (53, 53') et le canal (54) menant de la valve de commutation (53, 53') vers le récipient de retour (47) présentent une grande section transversale interne.

7. Appareil d'actionnement selon une des revendications 1 - 6,
**caractérisé en ce qu'**un capteur (46) détectant le trajet du piston (25) est agencé sur le carter (20).

8. Appareil d'actionnement selon une des revendications 1 - 7,
**caractérisé en ce que** la valve de commutation (53, 53') et la valve de surpression (52, 52') sont prévues de façon redondante.
